# EUROPÄISCHE PATENTSCHRIFT

(11) **EP 0 476 538 B1**
(45) Veröffentlichungstag und Bekanntmachung des Hinweises auf die Patenterteilung: **22.02.1995**
(21) Anmeldenummer: 91115562.0
(22) Anmeldetag: 13.09.1991
(51) Int. Cl.: D04H 1/54, D04H 1/00

(54) **Fasermatte und Verfahren zur Herstellung von Formteilen**
Fibrous web and process for producing molded articles
Matelas de fibres et procédé de réalisation de pièces moulées

(30) Priorität: 15.09.1990 DE 9013112 U; 15.09.1990 DE 9013113 U
(43) Veröffentlichungstag der Anmeldung: 25.03.1992
(73) Patentinhaber: POLYVLIES FRANZ BEYER GmbH & CO. KG, 48477 Hörstel (DE)
(72) Erfinder: Beyer, Franz, W-4446 Hörstel-Bevergern (DE); Lüke, Bruno, W-4407 Emsdetten (DE); Kinkel, Werner, W-8600 Bamberg (DE)
(74) Vertreter: von Füner, Alexander, Dr.

(56) Entgegenhaltungen:
- EP-A- 0 138 549
- EP-A- 0 340 982
- DE-U- 8 807 017
- US-A- 4 211 819
- US-A- 4 568 581

## Beschreibung

Die Erfindung betrifft eine textile Fasermatte unter Verwendung einer Mischung polymergleicher Fasern mit unterschiedlichem Eigenschaftsbild, überwiegend aber aus solchen mit höheren amorphen Anteilen gegenüber den anderen eingesetzten Fasern, welche bei der Herstellung von Formteilen, vorwiegend für die Fahrzeugindustrie, ausschließlich durch Zufuhr von Wärme und Kraft in ihre endgültige dimensionsstabile Form gebracht werden können.

Aus der Gebrauchsmusteranmeldung G 90 10 276.2 sind Faserstrukturen bekannt, die unter Einsatz von sogenannten Bikomponentenfasern Formteile mit teilweise stark unterschiedlichen Verdichtungen darstellen können, welche in Einbaulage ihre Form nicht verändern. Aufgabe war hier, eine polymereinheitliche Konstruktion bereitzustellen.

Diese Darstellung zeigte für die Fahrzeugindustrie einen ersten Weg zur sortenreinen Konstruktion, nachdem bisher dort ausschließlich Mischungen unterschiedlicher Faserwerkstoffe bekannt waren.

Beschrieben werden ferner Formteile aus bikomponenten Faserstrukturen, die dabei auch unterschiedliche Verdichtungen, z.B. für den Schall- und Vibrationsschutz, darstellen können, und die sich in einem oder mehreren nachgeschalteten Arbeitsgängen mit Oberflächenmaterialien kaschieren, verpressen und verdichten lassen. Insbesondere für Formteile mit extremen Dickenunterschieden ist dieses Material besonders gut geeignet, da bei der Thermofusion die Faserstruktur, anders als bei der mechanisch verfestigten, hier entwickelten Fasermatte aus besonderen Fasermischungen, Dicken bis zu 250 mm gegenüber hier ca. 25 mm darstellbar sind, und darüberhinaus durch die Bikomponentenfaser mehrfach thermisch belastet werden können, ohne ihre formgebenden Eigenschaften zu verlieren.

Aufgabe der Erfindung war es nun, nach neuen wegen der Vereinfachung zu suchen und dabei einen Werkstoff zu finden, mit dem man in möglichst einem Arbeitsschritt zu auch kaschierten Formteilen gelangt, insbesondere aber die Problematik bei den Formteilen mit der Bikomponentenfaser eliminiert, jeweils ihre Wärmestandfestigkeit als Formteil von den am niedrigsten erweichenden Faseranteilen abhängig zu machen und weiter die Takzeiten deutlich zu reduzieren bei gleichzeitiger Einsparung der energetischen Kosten. Das Formteil sollte weitgehend formbeständig dem warmen Werkzeug entnommen werden können. Ein Sandwicheffekt, bedingt durch die heißen Werkzeuge, bei weitgehend gleichmäßiger, vor allem Oberflächenverdichtung, war anzustreben. Neue Technologien, entsprechend den Erfordernissen zur Umweltfreundlichkeit, waren das Ziel.

Diese Aufgabe wurde wie aus den nachstehenden Ansprüchen ersichtlich gelöst, und zwar ist der Gegenstand der Erfindung eine Fasermatte aus Polyester, Polyamid oder Polyolefinfasern, die aus im wesentlichen einer Polyester-, Polyamid- oder Polyolefinfaser mit einer Faserdicke von 1,5 bis 500 dtex und einer Faserlänge von 30 mm bis endlos, zweitens aus einer Polyester-, Polyamid- oder Polyolefinfaser mit einer Faserdicke von 1,5 bis 500 dtex und einer Faserlänge von 30 mm bis endlos besteht, dadurch gekennzeichnet, daß die erste Faser eine Faser vom Typ A, eine Klebefaser mit hohen amorphen Anteilen darstellt, und die zweite Faser eine Faser vom Typ B immer polymereinheitlich mit der Faser vom Typ A darstellt.

Nach einer besonderen Ausführungsform ist die Matte ganz oder in Teilbereichen innerhalb der Fasermatte, oder an einer oder beiden Oberflächen oder aus einer Mischung dieser Möglichkeiten, im wesentlichen polymereinheitliche Verstärkungsstoffe oder Funktionselemente, wie Gewebe, Gelege, Vliese, Fasern, Pulver, oder eine Kombination dieser verschiedenen polymergleichen Materialien enthält.

Es ist bevorzugt, daß die hatte auf einer oder beiden Oberflächen einen thermoplastischen Haftvermittler aus dem identischen Polymerwerkstoff aufweist.

Zweckmäßig sollte die Matte auf einer oder beiden Oberflächen eine polymereinheitliche Dekorschicht aufweisen, welche auch vom Volumengewicht größer als die der formstabilisierenden Fasermatte sein kann.

Gegenstand der Erfindung ist auch ein Verfahren zur Herstellung von Formteilen unter Verwendung der oben beschriebenen Fasermatten, wobei die Fasermatte ausschließlich durch Einleiten von Kraft und Wärme verformt und zu dimensionsstabilen Formteilen verfestigt wird.

Schließlich ist Gegenstand der Erfindung ein Formteil basierend auf einer oder mehreren der obengenannten Fasermatten.

Erfindungsgemäß wurden zweckmäßigerweise in das Formteil oder an einer der beiden Oberflächen, ganz oder in Teilbereichen, im wesentlichen polymereinheitliche Verstärkungsstoffe oder Funktionselemente, wie Gewebe, Gelege, Fasern, Pulver, Profile, Vliese, Formteile, oder eine Kombination dieser verschiedenen Werkstoffe während des Verformens eingebracht.

Es ist weiterhin bevorzugt, daß eine oder beide Oberflächen einen thermoplastischen Haftvermittler aus dem jeweils der Faser entsprechenden Polymerwerkstoff aufweist.

Zweckmäßigerweise sollte eine oder beide Oberflächen Dekorschichten aus polymergleichem Werkstoff aufweisen, die auch aus einem vom Volumengewicht größeren Anteil als dem der formstabilisierenden Fasermatte bestehen könnte.

Nach einer Variante der Erfindung sind in das Formteil zur Versteifung Stege, Sicken oder andere formversteifende Bereiche mit höherer Verdichtung mit eingepreßt worden.

Um die angestrebten Ziele der erfindungsgemäßen Fasermatten für Formteile voll auszunutzen, war es daher wichtig, ein Material zu finden, welches in einer Art Umkehrprozeß, die in der Fasermatte, aufgrund der höheren amorphen Struktur, noch vorhandenen niedrigeren Erweichungstemperaturen der Hauptfaseranteile während des Temperatur- und Verdichtungsprozesses weitgehend in die normale Wärmestandfestigkeit der beigemischten sortengleichen Faser umwandelt, wobei diese zugefügten Fasern helfen, das Volumen darzustellen und auch das Schrumpfverhalten einengen, oder besondere Eigenschaftsbilder wie Farbe oder Schwerentflammbarkeit darstellen.

Bei diesen einzusetzenden Fasern, die für den Bereich Leichtvliese auf dem Bekleidungssektor, z.B. als Aufbügelmaterial, seit Jahren auf dem Markt ist, jedoch für den nachstehenden Bereich mit all ihren Vorteilen nicht geläufig war und daher auch nicht genutzt werden konnte, hat man bei der Herstellung die normal durchgeführte Umwandlung von der ungeordneten amorphen in die weitgehend kristalline Struktur nicht gehandhabt, und somit den Erweichungspunkt auf Temperaturen deutlich unter den der normal reagierenden Fasertype reduziert.

Die Aufgabe wurde somit erfindungsgemäß gelöst mit einer Mischung aus einer vorwiegend dickeren, normalen Faser Typ B und aus einer sogenannten Klebefaser Typ A mit erhöhten, amorphen Anteilen, und dem Einbeziehen besonderer Aufbereitungs-, Lager- und Nadeltechniken zur Erhaltung dieser Fasereigenschaftsbilder. Durch den Einsatz in heißen Werkzeugen, ergänzend eventuell auch mit Dampf bei luftdurchlässigen Werkzeugen, lassen sich nun diese höher amorphen Bereiche in der Faser weitgehend in solche Prozentsatze zwischen kristallin und amorph umwandeln, wie sie einer normal gefertigten, verstreckten Faser entsprechen. Dies geschieht in einem extrem kurzen Zeitbereich, so daß anschließend Formteile mit hoher Wärmestandfestigkeit und bereits hoher Formstabilität diesem Werkzeug entnommen werden können, welche nun zur rascheren Weiterverwendung in eine Abkühlform gelegt, bevor sie gegebenenfalls ihren endgültigen Bearbeitungen zugeleitet werden. Der Kaschiervorgang ist je nach Verformungsgrad in den Verformungsprozeß zu integrieren.

Als Fasern Typ A können z.B. Trevira-259 von Hoechst oder die Polyestertype KB von EMS-Chemie eingesetzt werden. Für Fasern Typ B kommt z.B. die Qualität EP 412 der EMS-Chemie und/oder Tervira 292 von Hoechst zum Einsatz.

Die erfindungsgemäßen Formteile können durch den Einsatz der beschriebenen polymereinheitlichen Fasermatte ihrer Aufgabe bei niedrigeren energetischen Kosten durch Konstruktionen, auch unter dem Aspekt möglichst geringen Materialverbrauchs, und einer gegebenen echten Wiederverwertung ohne Abfall in der Produktion, wie auch durch eine effektive Wiederverwertung bei späterer Demontage, die bisher eingesetzten, stark umweltbelastenden Materialien ersetzen. Weiter werden die darauf ausgelegten Verfahren so verbessert, daß nun mit weniger Arbeitsschritten, vor allem aber umweltfreundlich am Arbeitsplatz, ein wiederverwertbares Produkt aus nur einem Polymerwerkstoff eingesetzt werden kann, welches im Rahmen des Recyclings, mit sortengleichen Oberflächenmaterialien, zu einer wiedereinzusetzenden, identischen Polymerfaser nach diversen Herstellungsverfahren umzuwandeln ist. Im ungünstigsten Fall bei nicht sortenreinen Oberflächen-Dekorschichten ist die Trennung durch Erweichung der thermoplastischen Haftvermittler, oder gar Energierecycling ohne Freisetzung schädlicher Stoffe gewährleistet. Der bisher hohe Einsatz von Duroplasten bei Formteilen, die einem Recycling weitgehend entgegenstehen, und hohe Anteile von Phenol, Formaldehyd und Isocyanatbelastung, in Herstellung und Nutzung läßt sich ebenso ersetzen, wie z.B. FCKW-betriebene Polystyrolprodukte. Die Wiederverwertbarkeit der zur Zeit eingesetzten Produkte mit den unterschiedlichsten Polymerzusammensetzungen, wie auch den entsprechenden anorganischen und organischen Zuschlagstoffen, ist technisch nahezu unlösbar und unwirtschaftlich, und die Verwertzng im Rahmen des Verbrennens nicht immer zu verantworten.

Diese Probleme, für nahezu alle in Fahrzeugen vorhandenen Formteile, wurden durch den Einsatz nachstehend näher bestimmter Faserkombinationen und nach Bedarf polymereinheitlichen Verstärkungsmaterialien gelöst, die abhängig von Größe und Eigenschaftsbild des Formteils in bezug auf Mischungsverhältnisse, Verstärkungsmaterialien, Flächengewicht, Aufbereitungs- und Vernadelungstechnik dargestellt werden müssen. So wird als Basismaterial ein Typ A Polyester, eine Polyamid- oder als Alternative auch eine Polyolefinklebefaser eingesetzt, vorwiegend von solchen Klebefasertypen mit stark gegenüber sogenannten normalgefertigten Fasern erhöhten amorphen Anteilen und damit niedrigeren Erweichungstemperaturen. Als Fasertyp B kommt jeweils eine normale, meistens etwas stärkere polymereinheitliche Polyester-, Polyamid- oder Polyolefinfaser, immer aber polymereinheitlich, hinzu. Beide Fasertypen haben eine Faserlänge von 30 mm bis endlos und 1,5 bis 500 dtex. Der Materialanteil bzw. das Mischungsverhältnis liegt zwischen 0 und fast 100% bei Typ A, bei Typ B zwischen über 0 und 70%, gerechnet ohne eventuelle Verstärkungsmaterialien. So kann bei einem Formhimmel z.B. der Anteil bei 70% Typ A uns 30% Typ B liegen. Diese Fasern werden homogen vermischt und über mechanische Verfestigung locker vernadelt. Polymereinheitliche Verstärkungsstoffe, wie beispielsweise Gewebe, Gelege, Spinnvliese oder Pulver, können zur Verstärkung ganz oder in Teilbereichen mit eingearbeitet werden, oder an den Oberflächen allein oder zusätzlich, ebenfalls ganz oder in Teilbereichen angelagert werden. Auch eine mehrschichtige Matte mit in sich unterschiedlichen Mischungsverhältnissen ist unter Einsatz besonderer Nadeltechnik zur Vermeidung von Delaminierungen möglich. Die daraus erstellt Matte kann auch bereits, wenn überhaupt nötig, mit einer thermoplastischen Haftschicht aus gleichem Polymerwerkstoff versehen und als Rollenware oder Format dann in einer Presse verformt, verfestigt sowie kaschiert werden. In vielen Fällen ist bei Einsatz polymereinheitlicher Oberflächenmaterialien die Klebekraft der Faser A ausreichend, eine entsprechende Verbindung einzugehen, ohne daß zusätzlich polymereinheitliche Haftmaterialien eingesetzt werden müssen.

Die Verformung ist weitgehend mit vorhandenen Maschinenanlagen darstellbar, schneller - da keine zeitabhängige chemische Reaktion - als bei Materialien mit Harzen, wobei die einzuleitenden Kräfte deutlich unter denen liegen, die bei den heutigen vielfach verwendeten Holzfaserwerkstoffen erforderlich sind. Das bedeutet, daß bei neu zu erstellenden Anlagen der apparative Aufwand an Verformungsanlagen und Werkzeugen deutlich niedriger zu veranlagen ist. Bei bestimmten Formkörpern ist hierbei sogar die Kaschierung der Oberflächenvorderseite oder gar Vorder- und Rückseite in einem Arbeitsgang auch ohne thermoplastische Haftschicht möglich. Die gewünschte Verfestigung wird anders als bei den bisher bekannten und eingesetzten Materialien, ähnlich wie bei der eingangs erwähnten Gebrauchsmusteranmeldung, ausschließlich über den Druck und die Temperatur ohne jedwede anderen Bindermaterialien unter Berücksichtigung der Verweilzeit gesteuert. Voraussetzung dabei ist, daß die Dicke der Matte vor der Verformung größer ist als die Dicke des verpreßten Formkörpers. Vorteile gegenüber einer Bikomponentenfaserstruktur sind z.B. auch kostengünstigere Taktzeiten und Vorteile bei den Energiekosten. Vom Ergebnis ist dies ein deutlicher Schritt zu einer vereinfachten Technologie beim Verarbeiter.

Ob Polyester-, Polyamid- oder Polyolefinfasern eingesetzt werden, ist wegen der angestrebten Polymereinheitlichkeit abhängig von den eingesetzten Oberflächenmaterialien, den Werkzeugformen und den angestrebten Taktzeiten, da z.B. im Olefinbereich eine Erweiterung der amorphen Strukturen zur Zeit nur begrenzt gegeben ist, und von den zu erbringenden Wärmestandfestigkeiten der Formteile. Neben den Verarbeitungseigenschaften spielt gegenüber konventionellen Werkstoffen auch die geringe Feuchtigkeitsaufnahme und damit die gegenüber anderen Formteilen geringer eintretenden Veränderungen der mechanischen Eigenschaften derselben Matte eine große Rolle.

Für die Oberflächenkaschierungen sind die in der Fahrzeugindustrie zur Zeit eingesetzten Materialien in der bestehenden Form problemlos zu übernehmen, da sie weitgehend ebenfalls aus Polyester, Polyamid und Polyolefinen bestehen, so insbesondere Gewirke, Vliese und Strickstoffe wegen ihrer natürlichen Elastizität, z.B. im Bereich Formhimmel, Hutablagen, Koffer- und Motorraumauskleidung. Verformung und Kaschierung ist in warmen Werkzeugen durchzuführen, wobei die Werkzeugtemperatur teilweise auch dazu genutzt werden kann, die Fasern an der Oberfläche bis zu einer Art Plastifizierung zu führen, was dem Formteil eine sandwichartige Struktur bei größeren Dicken und damit höherer Biegesteifigkeit verleiht.

Bei der Verformung mit Kaschierung kann z.B. das Dekormaterial, welches unter Umständen nur eine bestimmte Wärmebelastung verträgt (wichtig bei Folien), der oberen niedriger beheizten Werkzeughälfte zugewandt und verpreßt werden, während die Werkzeughälfte, die der Fasermatte zugeneigt ist, eine höhere Temperatur aufweist, um ein schnelleres Aufheizen der Matte mit Wärme zu erreichen. Die Wärmedifferenzen zwischen den Werkzeughälften liegen jedoch relativ eng, damit Spannungen vermieden werden.

Nachfolgend nun eine Beispiel für die Herstellung eines PKW-Formhimmels auf der Basis einer Polyestermatte ohne thermoplastischen Haftschicht bereits auf der Matte.

### Beispiel:

Neben einer 1200 g/m² Polyesterfasermatte wird ein 170 g/m² Polyestergewirke und eine Polyesterhaftfolie von 60 g/m² mit einer Aktivierungstemperatur von 150 bis 170°C und einer Wärmestandfestigkeit von 110°C.

Das Polyestergewirke wird über Kontaktwärme leicht vorgewärmt. Die Trennfolie wird von der Klebefolie abgezogen und beide Materialien zwischen die Werkzeughälften gezogen. Die Fasermatte wird dann von der Rolle ebenfalls zwischen die Werkzeuge eingeführt, wobei partiell, sofern besonders komplizierte Formgebungen vorliegen, in den Breichen, in denen besonders hohe Festigkeiten verlangt werden, Polyesterpulver aufgestreut wird. Die Ober- und Unterwerkzeuge sind auf ca 175°C aufgeheizt und können extrem verpreßte Bereiche um 1 mm darstellen, so daß statisch und optisch bedingten Verformungs- und Verfestigungsbereiche leicht zu erreichen sind.

Die über die Verweilzeit gesteuerte Wärme in der Fasermatte reicht aus, Klebefolie, fasermatte und Polyestergewirke zu verbinden, die erhöhten amorphen Anteile der Klebefaser anteilig in kristalline umzuwandeln und durch den gleichzeitig ausgeübten Druck eine ausreichende Dimensionsstabilität des Formteils zu erzielen, die wiederum genügt, um das Teil in ein Auskühlwerkzeug zu überführen, in dem nach kürzester Zeit dann der Formhimmel seine endgültige Formbeständigkeit erhält, um gegebenenfalls noch gestanzt oder einer Weiterverarbeitung zu geführt zu werden. In den verpreßten Bereichen kann, rückseitig im Verformungsprozeß integriert, eine mit Klarschrift oder einer Art Barcodierung ausgeführte Kennzeichnung mit ausgeführt werden, welche Wiederverwertungs- oder Sortieranleitungen enthält.

## Patentansprüche

1. Fasermatte aus Polyester, Polyamid oder Polyolefinfasern, die erstens aus im wesentlichen einer Polyester-, Polyamid- oder Polyolefinfaser mit einer Faserdicke von 1,5 bis 500 dtex und einer Faserlänge von 30 mm bis endlos, zweitens aus einer Polyester-, Polyamid- oder Polyolefinfaser mit einer Faserdicke von 1,5 bis 500 dtex und einer Faserlänge von 30 mm bis endlos besteht, **dadurch gekennzeichnet**, daß die erste Faser eine Faser vom Typ A, eine Klebefaser mit hohen amorphen Anteilen, und die zweite Faser eine Faser vom Typ B immer polymereinheitlich mit der Faser vom Typ A darstellt.

2. Fasermatte nach Anspruch 1, **dadurch gekenzeichnet**, daß die Matte ganz oder in Teilbereichen innerhalb der Fasermatte, oder an einer oder beiden Oberflächen oder aus einer Mischung dieser Möglichkeiten, im wesentlichen polymereinheitliche Verstärkungsstoffe oder Funktionselemente, wie Gewebe, Gelege, Vliese, Fasern, Pulver oder eine Kombination dieser verschiedenen polymergleichen Materialien enthält.

3. Fasermatte nach Anspruch 1 oder 2, **dadurch gekennzeichnet**, daß die Matte auf einer oder beiden Oberflächen einen thermoplastischen Haftvermittler aus dem identischen Polymerwerkstoff aufweist.

4. Fasermatte nach einem der Ansprüche 1 bis 3, **dadadurch gekennzeichnet**, daß die Matte auf einer oder beiden Oberflächen eine polymereinheitliche Dekorschicht aufweist, welche auch vom Volumengewicht größer als die der formstabilisierenden Fasermatte sein kann.

5. Verfahren zur Herstellung von Formteilen unter Verwendung von Fasermatten nach einem der Ansprüche 1 bis 4, **dadurch gekennzeichnet**, daß man die Fasermatte ausschließlich durch Einleiten von Kraft und Wärme verformt und zu dimensionsstabilen Formteilen verfestigt.

6. Formteil enthaltend eine oder mehrere Fasermatten nach einem der Ansprüche 1 bis 5.

7. Formteil nach Anspruch 6, **dadurch gekennzeichnet**, daß in das Formteil oder an einer der beiden Oberflächen, im wesentlichen polymereinheitliche Verstärkungsstoffe oder Funktionselemente, ganz oder in Teilbereichen, wie z.B. Gewebe, Gelege, Fasern, Pulver, Profile, Vliese, Formteile, oder eine Kombination dieser verschiedenen Werkstoffe während des Verformens eingebracht wurden.

8. Formteil nach einem der Ansprüche 6 oder 7, **dadurch gekennzeichnet**, daß eine oder beide Oberflächen einen thermoplastischen Haftvermittler aus dem jeweils der Faser entsprechenden Polymerwerkstoff aufweisen.

9. Formteil nach einem der Ansprüche 6 bis 8, **dadurch gekennzeichnet**, daß eine oder beide Oberflächen Dekorschichten aus polymergleichem Werkstoff aufweisen, die auch aus einem vom Volumengewicht größeren Anteil als dem der formstabilisierenden Fasermatte bestehen können.

10. Formteil nach einem der Ansprüche 6 bis 9, **dadurch gekennzeichnet**, daß zur Versteifung Stege, Sicken oder andere formversteifende Bereiche mit höherer Verdichtung mit eingepreßt sind.

## Claims

1. Fibrous web of polyester, polyamide or polyolefin fibres, which consists firstly of a substantially polyester, polyamide or polyolefin fibre with a fibre thickness of 1.5 to 500 dtex and a fibre length of from 300 mm to endless, and, secondly, of a polyester, polyamide or polyolefin fibre with a fibre thickness of from 1.5 to 500 dtex and a fibre length of from 300 mm to endless, characterised in that the first fibre is a type A fibre, an adhesive fibre with highly amorphous parts, and the second fibre is a type B fibre, which is always of the same degree of polymerisation as the fibre of type A.

2. Fibrous web according to Claim 1, characterised in that the web contains, either wholly or in partial areas inside the fibrous web, or on one or both surfaces or at a mixture of these possibilities, reinforcing substances or function elements which are substantially of the same degree of polymerisation, such as woven fabrics, webs, non-woven fabrics, fibres, powders, or a combination of these various polymer-equivalent materials.

3. Fibrous web according to Claim 1 or Claim 2, characterised in that the web comprises, on one or both surfaces, a thermoplastic bonding agent of the identical polymer working material.

4. Fibrous web according to any one of Claims 1 to 3, characterised in that the web comprises, on one or both surfaces, a decorative layer of the same degree of polymerisation, which can also be larger than the form stabilising fibrous web as regards the volume weight.

5. Process for the production of shaped parts using fibrous webs according to one of Claims 1 to 4, characterised in that the fibrous web is deformed exclusively by the use of force and heat and set as mould parts which are dimensionally stable.

6. Mould parts containing one or more fibrous webs according to one of Claims 1 to 5.

7. Mould part according to Claim 6, characterised in that, in the mould part or on one of the two surfaces, there are introduced, during the deforming process, reinforcing substances or function elements which are substantially of the same degree of polymerisation, such as, for example, woven fabrics, webs, fibres, powders, profiled sections, non-woven fabrics, formed parts or a combination of these different working materials, and these are introduced wholly or in part areas.

8. Mould part according to any one of Claims 6 to 7, characterised in that one or both surfaces comprises a thermoplastic bonding agent of the polymer working material which corresponds to the fibre in each case.

9. Mould part according to one of Claims 6 to 8, characterised in that one or both surfaces comprise decorative layers of material which are identical as regards polymerisation, which may also consist of a larger part of the volume weight than the form stabilising fibrous web.

10. Mould part according to any one of Claims 6 to 9, characterised in that, for reinforcement, struts, corrugations, or other form reinforcing areas with high compression are incorporated in the pressing.

## Revendications

1. Nappe fibreuse en fibres de polyester, de polyamide ou de polyoléfine, qui se compose d'une part dans l'essentiel d'une libre de polyester, de polyamide ou de polyoléfine ayant une épaisseur de fibre de 1,5 à 500 dtex et une longueur de fibre de 30 mm jusqu'à l'infini, d'autre part d'une fibre de polyester, de polyamide ou de polyoléfine ayant une épaisseur de fibre de 1,5 à 500 dtex et une longueur de fibre de 30 mm jusqu'à l'infini, caractérisée en ce que la première fibre est une fibre de type A, une fibre adhésive ayant de fortes teneurs en substances amorphes, et la seconde fibre est une fibre de type B toujours homogène en polymère avec la fibre de type A.

2. Nappe fibreuse selon la revendication 1, caractérisée en ce que la nappe contient complètement ou dans des zones partielles à l'intérieur de la nappe fibreuse, ou bien sur une ou les deux surfaces, ou bien au moyen d'une combinaison desdites possibilités, dans l'essentiel des substances de renforcement ou éléments fonctionnels homogènes en polymère, tels que des tissus, des nappes de fils, des feutres, des fibres, des poudres ou bien un mélange de ces différents matériaux identiques en polymère.

3. Nappe fibreuse selon la revendication 1 ou 2, caractérisée en ce que la nappe comporte, sur une ou les deux surfaces, un agent adhésif thermoplastique formé d'un polymère identique.

4. Nappe fibreuse selon une des revendications 1 à 3, caractérisée en ce que la nappe comporte, sur une ou les deux surfaces, une couche décorative homogène en polymère et qui peut également avoir un poids volumique plus grand que celui de la nappe fibreuse stabilisatrice de forme.

5. Procédé de fabrication de pièces de forme en utilisant des nappes fibreuses selon une des revendications 1 à 4, caractérisé en ce qu'on met en forme la nappe fibreuse exclusivement par application de force et de chaleur et on la solidifie en pièces de forme de dimensions stables.

6. Pièce de forme contenant une ou plusieurs nappes fibreuses selon une des revendications 1 à 5.

7. Pièce de forme selon la revendication 6, caractérisée en ce qu'on a incorporé pendant la mise en forme, dans la pièce de forme ou bien sur une des deux surfaces, des substances de renforcement ou éléments fonctionnels essentiellement homogènes en polymères, en les intégrant complètement ou dans des zones partielles, comme par exemple des tissus, des nappes de fils, des fibres, des poudres, des profilés, des feutres, des pièces de forme, ou bien une combinaison de ces matériaux différents.

8. Pièce de forme selon une des revendications 6 ou 7, caractérisée en ce qu'une ou les deux surfaces comportent un agent adhésif thermoplastique formé du matériau polymère correspondant à chaque fois à la fibre.

9. Pièce de forme selon une des revendications 6 à 8, caractérisée en ce qu'une ou les deux surfaces comportent des couches décoratives formées d'un matériau identique en polymère et qui peuvent également se composer d'une nappe fibreuse dont le poids volumique est supérieur à celui de la nappe fibreuse stabilisatrice de forme.

10. Pièce de forme selon une des revendications 6 à 9, caractérisée en ce que, pour un renforcement, des nervures, des moulures ou d'autres zones de renforcement de forme sont créées par une plus forte compression.
